# EUROPEAN PATENT APPLICATION

(11) **EP 3 848 824 A1**
(43) Date of publication of application: **14.07.2021**
(21) Application number: 20216893.6
(22) Date of filing: 23.12.2020
(51) Int. Cl.: G06F 16/951, G06Q 30/02

(54) **LANDING PAGE PROCESSING METHOD, APPARATUS, DEVICE AND MEDIUM**

(30) Priority: 07.01.2020 CN 202010015501
(71) Applicant: BAIDU ONLINE NETWORK TECHNOLOGY (BEIJING) CO., LTD., Beijing 100085 (CN)
(72) Inventor: LU, Huasheng, Beijing, 100085 (CN); LIU, Lin, Beijing, 100085 (CN)
(74) Representative: advotec.

(57) **Abstract**

This present disclosure provides a landing page processing method, a landing page processing apparatus, a device and a medium, and relates to a field of intelligent search technologies. The method includes: obtaining (S110, S210) a landing page corresponding to an advertisement page; identifying (S120, S220) an advertisement conversion component contained in the landing page; and establishing (S130) a binding relation between the advertisement conversion component and the advertisement page.

## Description

### TECHNICAL FIELD

The present disclosure relates to a field of computer technologies, especially intelligent search technologies, and more particularly, to a landing page processing method, a landing page processing apparatus, a device and a medium.

### BACKGROUND

Generally, a landing page corresponding to an advertisement page contains an advertisement conversion component, and a user could contact an advertiser or obtain further information related to the advertisement by clicking the advertisement conversion component.

However, there is currently no specific implementation scheme for determining conversion components included in the landing page.

### SUMMARY

Embodiments of the present disclosure provide a landing page processing method, a landing page processing apparatus, a device and a medium.

Embodiments of the present disclosure provide a landing page processing method. The landing page processing method includes: obtaining a landing page corresponding to an advertisement page; identifying an advertisement conversion component contained in the landing page; and establishing a binding relation between the advertisement conversion component and the advertisement page.

In an embodiment, obtaining the landing page corresponding to the advertisement page includes: obtaining address information of the landing page corresponding to the advertisement page from a preset database; and crawling the landing page through a crawler browser based on the address information.

In an embodiment, identifying the advertisement conversion component contained in the landing page includes: searching for a preset tag in a Hypertext Markup Language (HTML) file of the landing page through character recognition; and obtaining a character string after the preset label that satisfies a preset condition through character string matching, and determining a component corresponding to the character string as the advertisement conversion component.

In an embodiment, identifying the advertisement conversion component contained in the landing page includes: searching for a dom node in the HTML file of the landing page; performing simulated clicking on the dom node; intercepting a network request sent after the simulated clicking; and obtaining a character string contained in the network request that satisfies a preset condition through character string matching, and determining a component corresponding to the character string as the advertisement conversion component.

In an embodiment, after establishing the binding relation between the advertisement conversion component and the advertisement page, the method further includes: receiving a search request sent by a client, and obtaining a search result list according to the search request; and if a search result item in the search result list includes the advertisement page, determining the advertisement conversion component contained in the landing page corresponding to the advertisement page according to the binding relation, and sending a search response message carrying summary information of the landing page and the advertisement conversion component to the client, so that when the client displays the summary information of the landing page on a search result page, the advertisement conversion component is displayed.

In an embodiment, establishing the binding relation between the advertisement conversion component and the advertisement page includes: adding the advertisement conversion component to a preset database, so that the advertisement conversion component and the advertisement page are stored in an association manner.

In an embodiment, the advertisement conversion component includes at least one of a telephone link component, a message link component, a consultation link component, a form link component, a calling link component, and an APK link component.

Embodiments of the present disclosure provide a landing page processing apparatus. The landing page processing apparatus includes: a landing page obtaining module, an identifying module and a binding relation establishing module.

The landing page obtaining module is configured to obtain a landing page corresponding to an advertisement page.

The identifying module is configured to identify an advertisement conversion component contained in the landing page.

The binding relation establishing module is configured to establish a binding relation between the advertisement conversion component and the advertisement page.

In an embodiment, the landing page obtaining module includes: an address information obtaining unit and a landing page crawling unit.

The address information obtaining unit is configured to obtain address information of the landing page corresponding to the advertisement page from a preset database.

The landing page crawling unit is configured to crawl the landing page through a crawler browser based on the address information.

In an embodiment, the identifying module includes: a preset tag searching unit and a character string matching unit.

The preset tag searching unit is configured to search for a preset tag in a Hypertext Markup Language (HTML) file of the landing page through character recognition.

The character string matching unit is configured to obtain a character string after the preset label that satisfies a preset condition through character string matching, and determine a component corresponding to the character string as the advertisement conversion component.

In an embodiment, the identifying module includes: a searching unit, a simulated clicking unit, a network request intercepting unit and a character string obtaining unit.

The searching unit is configured to search for a dom node in the HTML file of the landing page.

The simulated clicking unit is configured to perform simulated clicking on the dom node.

The network request intercepting unit is configured to intercept a network request sent after the simulated clicking.

The character string obtaining unit is configured to obtain a character string contained in the network request that satisfies a preset condition through character string matching, and determine a component corresponding to the character string as the advertisement conversion component.

In an embodiment, the apparatus further includes: a search result list obtaining module and a search response message sending module.

The search result list obtaining module is configured to receive a search request sent by a client, and obtain a search result list according to the search request.

The search response message sending module is configured to, if a search result item in the search result list includes the advertisement page, determine the advertisement conversion component contained in the landing page corresponding to the advertisement page according to the binding relation, and send a search response message carrying summary information of the landing page and the advertisement conversion component to the client, so that when the client displays the summary information of the landing page on a search result page, the advertisement conversion component is displayed.

In an embodiment, the binding relation establishing module includes: a storing unit. The storing unit is configured to add the advertisement conversion component to a preset database, so that the advertisement conversion component and the advertisement page are stored in an association manner.

In an embodiment, the advertisement conversion component includes at least one of a telephone link component, a message link component, a consultation link component, a form link component, a calling link component, and an APK link component.

Embodiments of the present disclosure provide an electronic device. The electronic device includes: at least one processor, and a memory communicatively connected to the at least one processor. The memory stores instructions executable by the at least one processor, and when the instructions are executed by the at least one processor, the at least one processor is caused to execute the method according to any one of embodiments of the present disclosure.

Embodiments of the present disclosure provide a non-transitory computer-readable storage medium storing computer instructions, the computer instructions are used to make a computer to execute the method according to any one of embodiments of the present disclosure.

Additional effects of the above-mentioned optional manners will be described below in combination with specific embodiments.

### BRIEF DESCRIPTION OF THE DRAWINGS

The accompanying drawings are used to better understand the solution, and do not constitute a limitation on the application, in which:
FIG. 1 is a flowchart of a landing page processing method according to an embodiment of the present disclosure.
FIG. 2 is a flowchart of a landing page processing method according to another embodiment of the present disclosure.
FIG. 3 is a schematic diagram of content of a network request according to an embodiment of the present disclosure.
FIG. 4 is a schematic diagram of a landing page processing apparatus according to an embodiment of the present disclosure.
FIG. 5 is a block diagram of an electronic device used to implement the landing page processing method according to an embodiment of the present disclosure.

### DETAILED DESCRIPTION

The following describes the exemplary embodiments of the present disclosure with reference to the accompanying drawings, which includes various details of the embodiments of the present disclosure to facilitate understanding, which shall be considered merely exemplary. Therefore, those of ordinary skill in the art should recognize that various changes and modifications can be made to the embodiments described herein without departing from the scope and spirit of the present disclosure. For clarity and conciseness, descriptions of well-known functions and structures are omitted in the following description.

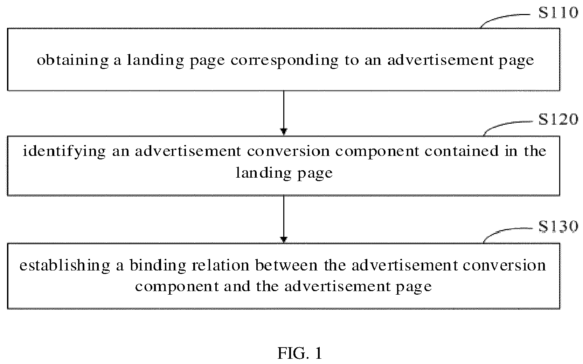

FIG. 1 is a flowchart of a landing page processing method according to an embodiment of the present disclosure. This embodiment may be applicable for a situation where an advertisement conversion component is directly displayed. Typically, this embodiment may be applicable for a situation where a landing page corresponding to an advertisement page is displayed on a search result page while simultaneously displaying the advertisement conversion component contained in the landing page. The landing page processing method disclosed in this embodiment is executed by a landing page processing apparatus, which is implemented by software and/or hardware. As illustrated in FIG. 1, the landing page processing method according to this embodiment includes the following steps.

At block S110, a landing page corresponding to an advertisement page is obtained.

The landing page corresponding to the advertisement page is a web page containing specific content of an advertisement, and a user views details of the advertisement in the landing page.

In detail, currently, an advertisement publisher is required to provide information of the advertisement conversion component to a search server, so that the search server is able to send a search result and the advertisement conversion component to a client for simultaneous displaying of the search result and the advertisement conversion component when the search server receives a search request from the client. In this way, after the user clicks the advertisement conversion component, an advertiser is contacted or further information related to the advertisement is obtained. However, if the publisher does not provide the information of the advertisement conversion component to the search server, the user needs to click to launch the landing page and find the advertisement conversion component therein voluntarily before clicking the advertisement conversion component to contact the publisher or obtain further information, which reduces a conversion rate of the advertisement. Therefore, in the embodiments of the present disclosure, the landing page corresponding to the advertisement page is obtained first, and then the landing page is subsequently analyzed, so as to display the advertisement conversion component contained in the landing page while displaying the landing page corresponding to the advertisement page.

In an embodiment, alternatively, obtaining the landing page corresponding to the advertisement page includes: obtaining address information of the landing page corresponding to the advertisement page from a preset database; and crawling the landing page through a crawler browser based on the address information.

The preset database may be an advertisement database for storing information of landing pages corresponding to advertisement pages. For example, in order to facilitate preservation of the information of the landing page corresponding to the advertisement page to subsequently obtain the landing page for displaying based on the information of the landing page corresponding to the advertisement page, address information (e.g. URL address) of the landing page corresponding to the advertisement page may be stored in the preset database. Based on the address information of the landing page, a crawler browser such as phantomjs is used to simulate access of a normal user to crawl the landing page, so that the acquisition of the landing page may be achieved.

At block S120, an advertisement conversion component contained in the landing page is identified.

The advertisement conversion component includes at least one of a telephone link component, a message link component, a consultation link component, a form link component, a calling link component, and an APK link component. After clicking the telephone link component, the user initiates an Internet phone request to communicate with the advertisement publisher. After the user clicks the message link component, a message editing interface pops up for the user to edit information in the message editing interface. The information after editing is sent to the advertisement publisher. After the user clicks the consultation link component, a consultation communication interface is launched for the user to consult and communicate with a service staff or an intelligent service robot to obtain content related to the advertisement. After the user clicks the form link component, the current page is redirected to other pages or an address for downloading files is displayed. After the user clicks the calling link component, related application is called. After the user clicks the APK link component, a corresponding application is downloaded. By displaying the above-mentioned advertisement conversion component included in the landing page to the user, it is convenient for the user to click the advertisement conversion component to obtain conversion material information related to the advertisement.

In detail, in order to determine the advertisement conversion component contained in the landing page, so as to display the advertisement conversion component when the landing page is displayed, before displaying the landing page, the advertisement conversion component contained in the landing page is identified to determine whether the landing page contains the advertisement conversion component or extract the advertisement conversion component.

At block S130, a binding relation between the advertisement conversion component and the advertisement page is established.

For example, even when the advertisement conversion component is included in the landing page, if the advertisement publisher does not provide the advertisement conversion component to the search server, the search server may not send the advertisement conversion component to the client, thus it is difficult for the client to directly display the advertisement conversion component while displaying summary information of the landing page. Therefore, in this embodiment of the present disclosure, after the advertisement conversion component is identified, the binding relation between the advertisement conversion component and the advertisement page is established, so as to rapidly and directly determine the advertisement conversion component included in the landing page corresponding to the advertisement page based on the binding relation, such that when displaying the landing page, the advertisement conversion component bound to the landing page is directly displayed. In the above solution, even if the advertisement publisher does not provide the advertisement conversion component to the search server, the advertisement conversion component contained in the landing page corresponding to the advertisement page could be determined according to the binding relation between the landing page and the advertisement conversion component, so that the client displays the advertisement conversion component while displaying the landing page, without the user clicking to launch the landing page to search for the advertisement conversion component, which facilitates user's operations and improves the conversion rate of the advertisement.

In the technical solution of the embodiments of the disclosure, the advertisement conversion component in the landing page corresponding to the advertisement page is identified, and the binding relation between the advertisement conversion component and the advertisement page is established, a cumbersome problem that the user needs to launch the landing page to find the advertisement conversion component is solved, and when displaying the landing page, the advertisement conversion component is displayed simultaneously based on the binding relation, which facilitates the user to click the advertisement conversion component and improves the conversion efficiency of the advertisement.

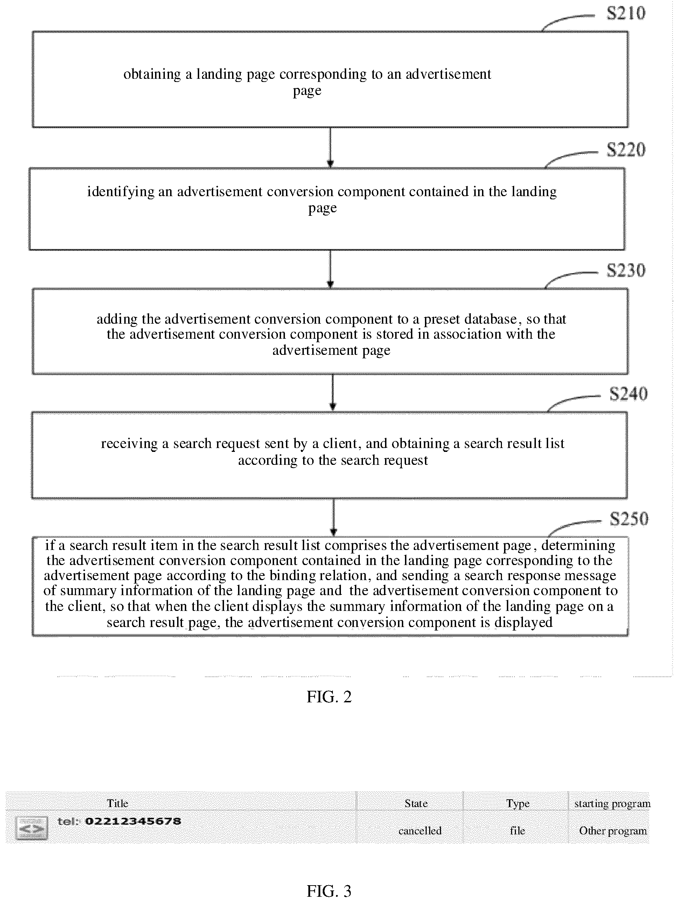

FIG. 2 is a flowchart of a landing page processing method according to another embodiment of the present disclosure. This embodiment is an optional solution proposed on the basis of the foregoing embodiment. As illustrated in FIG. 2, the landing page processing method according to this embodiment includes the following steps.

At block S210, a landing page corresponding to an advertisement page is obtained.

At block S220, an advertisement conversion component contained in the landing page is identified.

Alternatively, identifying the advertisement conversion component contained in the landing page includes: searching for a preset tag in a Hypertext Markup Language (HTML) file of the landing page through character recognition; and obtaining a character string after the preset label that satisfies a preset condition through character string matching, and determining a component corresponding to the character string as the advertisement conversion component.

The preset tag is used to indicate attributes in HTML and to identify content, or to indicate beginning and ending of the content. For example, for landing page information "<a external href= "tel:02212345678">", the preset tag "a" defines a hyperlink, which is used to link to another page from one page. If the preset tag "a" is found, it indicates that the content after the preset tag is hyperlink content corresponding to the advertisement conversion component to be identified, in which "href' is used to indicate a target of the hyperlink. Character string matching is performed on the character string after the preset tag to determine whether the character string meets the preset condition. The preset condition may be a preset character string format that meets a format of the link component. For example, for a telephone link component, the preset condition of the corresponding character string is that the format meets "tel: ***********", and for the consultation link component, the preset condition of the corresponding character string is that the format meets "******.com". When it is determined that the character string after the preset tag meets the preset condition through the character string matching, it is determined that the character string is the hyperlink content in the conversion material information corresponding to the advertisement, and the component corresponding to the character string is used as the advertisement conversion component. In addition, in the embodiments of the present disclosure, the character string after the preset tag that meets the preset condition is obtained by directly performing character string matching, and the component corresponding to the character string is used as the advertisement conversion component, such that the identification of the advertisement conversion component contained in the landing page may be achieved. In the embodiments of the disclosure, the preset tag is searched first, and then the character string matching is performed to obtain the advertisement conversion component. Since the content after the preset tag is the character string in the hyperlink, a location of the character string can be determined more directly and rapidly to facilitate the character string matching.

Alternatively, identifying the advertisement conversion component contained in the landing page includes: searching for a dom node in the HTML file of the landing page; performing simulated clicking on the dom node; intercepting a network request sent after the simulated clicking; and obtaining a character string contained in the network request that satisfies a preset condition through character string matching, and determining a component corresponding to the character string as the advertisement conversion component.

For example, it is possible that the HTML file does not directly contain the character string corresponding to the advertisement conversion component. Therefore, if the character string matching is directly performed based on the content of the HTML file, the advertisement conversion component may not be found. Therefore, in the embodiments of the present disclosure, the dom node in the HTML file of the landing page is searched. The dom node is used to retrieve any element or content in a web page, and to access the content in the HTML file. The dom node in the HTML file of the landing page, such as a div node, is founded and a simulated clicking is performed on the dom node to intercept the network request sent after the simulated clicking on the dom node. As illustrated in FIG. 3, a phone link may be included in the network request. The network request may contain the character string corresponding to the advertisement conversion component. Therefore, for the content in the network request, a character string that meets the preset condition is obtained through the character string matching, so that the component corresponding to the character string is used as the advertisement conversion component to achieve acquisition of the advertisement conversion component in the landing page. In the above solution, the advertisement conversion component dynamically bound by a front-end script may be accurately obtained when the content of the HTML file does not directly include the advertisement conversion component.

At block S230, the advertisement conversion component is added to a preset database, so that the advertisement conversion component and the advertisement are is stored in an association manner.

For example, currently, in the preset database, only the address information of the landing page corresponding to the advertisement page is stored, so the advertisement conversion components contained in the landing page may not be displayed simultaneously when the landing page is displayed. Therefore, in the embodiments of the present disclosure, the advertisement conversion component is stored in association with the advertisement page in the database, so that while the landing page corresponding to the advertisement page is called, the advertisement conversion component stored in association with the advertisement page is called, so as to facilitate simultaneous displaying.

At block S240, a search request sent by a client is received, and a search result list is obtained according to the search request.

The search request is generated by the user's input operation on the client. According to the search request, a search result list matching the search request is obtained, so that search results related to the search request are displayed to the user.

At block S250, if a search result item in the search result list includes the advertisement page, the advertisement conversion component contained in the landing page corresponding to the advertisement page is determined according to the binding relation, and a search response message carrying summary information of the landing page and the advertisement conversion component is sent to the client, so that when the client displays the summary information of the landing page on a search result page, the advertisement conversion component is displayed for the user's clicking.

For example, in order to display the advertisement conversion component contained in the landing page corresponding to the advertisement page to the user while displaying the landing page corresponding to the advertisement page to the user, if the advertisement page is included in the search result list, the summary information of the landing page corresponding to the advertisement page and the advertisement conversion component are included in the search response message and sent to the client, so that the client displays the summary information of the landing page and the advertisement conversion component at the same time. The advertisement conversion component is displayed in the form of an icon or a triggerable element. In the above solution, it is convenient for the user to intuitively find and click the advertisement conversion component to contact the advertisement publisher or obtain further information related to the advertisement. Moreover, even if the advertisement publisher does not provide the advertisement conversion component to the search server, the client may display the summary information of the landing page and the advertisement conversion component based on the search response message including the summary information of the landing page and the advertisement conversion component.

In this embodiment of the disclosure, the preset tag in the HTML file of the landing page is searched, the character string after the preset label that satisfies the preset condition is obtained through the character string matching, and the component corresponding to the character string is determined as the advertisement conversion component. Since the content after the preset tag is the character string in the hyperlink, the location of the character string may be determined directly and rapidly, which facilitates the character string matching. The dom node in the HTML file of the landing page is searched, and the simulated clicking is performed on the dom node. The network request sent after the simulated clicking is intercepted, the character string contained in the network request that satisfies the preset condition is obtained through the character string matching, and a component corresponding to the character string is determined as the advertisement conversion component. Therefore, when the content of the HTML file does not directly contain the advertisement conversion component, the advertisement conversion component dynamically bound by the front-end script is accurately obtained.

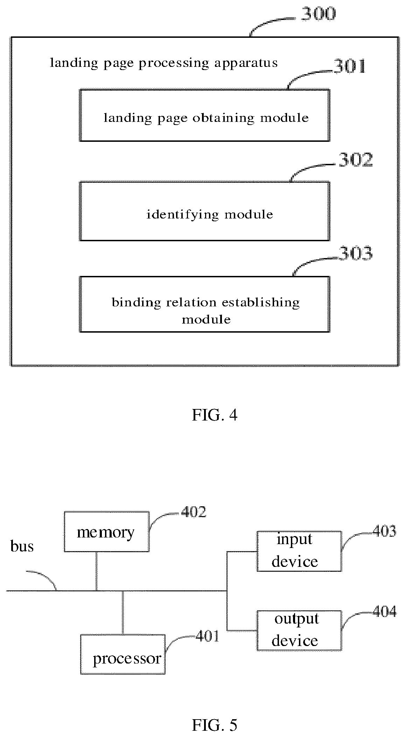

FIG. 4 is a schematic diagram of a landing page processing apparatus according to an embodiment of the present disclosure. As illustrated in FIG. 4, the embodiment of the present disclosure discloses a landing page processing apparatus 300. The apparatus 300 includes a landing page obtaining module 301, an identifying module 302, and a binding relation establishing module 303.

The landing page obtaining module 301 is configured to obtain a landing page corresponding to an advertisement page.

The identifying module 302 is configured to identify an advertisement conversion component contained in the landing page.

The binding relation establishing module 303 is configured to establish a binding relation between the advertisement conversion component and the advertisement page.

Further, the landing page obtaining module 301 includes: an address information obtaining unit and a landing page crawling unit.

The address information obtaining unit is configured to obtain address information of the landing page corresponding to the advertisement page from a preset database.

The landing page crawling unit is configured to crawl the landing page through a crawler browser based on the address information.

Further, the identifying module 302 includes: a preset tag searching unit and a character string matching unit.

The preset tag searching unit is configured to search for a preset tag in a Hypertext Markup Language (HTML) file of the landing page through character recognition.

The character string matching unit is configured to obtain a character string after the preset label that satisfies a preset condition through character string matching, and determine a component corresponding to the character string as the advertisement conversion component.

Moreover, the identifying module 302 includes: a searching unit, a simulated clicking unit, a network request intercepting unit and a character string obtaining unit.

The searching unit is configured to search for a dom node in the HTML file of the landing page.

The simulated clicking unit is configured to perform simulated clicking on the dom node.

The network request intercepting unit is configured to intercept a network request sent after the simulated clicking.

The character string obtaining unit is configured to obtain a character string contained in the network request that satisfies a preset condition through character string matching, and determine a component corresponding to the character string as the advertisement conversion component.

Furthermore, the apparatus further includes: a search result list obtaining module and a search response message sending module.

The search result list obtaining module is configured to receive a search request sent by a client, and obtain a search result list according to the search request.

The search response message sending module is configured to, if a search result item in the search result list includes the advertisement page, determine the advertisement conversion component contained in the landing page corresponding to the advertisement page according to the binding relation, send a search response message carrying summary information of the landing page and the advertisement conversion component to the client, so that when the client displays the summary information of the landing page on a search result page, the advertisement conversion component is displayed for the user's clicking.

Further, the binding relation establishing module 303 includes: a storing unit. The storing unit is configured to add the advertisement conversion component to a preset database, so that the advertisement conversion component and the advertisement page are stored in an association manner.

Further, the advertisement conversion component includes at least one of a telephone link component, a message link component, a consultation link component, a form link component, a calling link component, and an APK link component.

The landing page processing apparatus according to the embodiments of the present disclosure executes the landing page processing method according to any embodiment of the present disclosure, and has functional modules and beneficial effects corresponding to the execution method.

According to the embodiments of the present disclosure, the present disclosure also provides an electronic device and a readable storage medium.

FIG. 5 is a block diagram of an electronic device used to implement the locating element detection method according to an embodiment of the present disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 5, the electronic device includes: one or more processors 401, a memory 402, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 401 is taken as an example in FIG. 5.

The memory 402 is a non-transitory computer-readable storage medium according to the present disclosure. The memory stores instructions executable by at least one processor, so that the at least one processor executes the cross-camera obstacle tracking method according to the present disclosure. The non-transitory computer-readable storage medium of the present disclosure stores computer instructions, which are used to cause a computer to execute the landing page processing method according to the present disclosure.

As a non-transitory computer-readable storage medium, the memory 402 is configured to store non-transitory software programs, non-transitory computer executable programs and modules, such as program instructions/modules corresponding to the cross-camera obstacle tracking method in the embodiment of the present disclosure (For example, the landing page obtaining module 301, the identifying module 302, and the binding relation establishing module 303 shown in FIG. 4). The processor 401 executes various functional applications and data processing of the server by running non-transitory software programs, instructions, and modules stored in the memory 402, that is, implementing the landing page processing method in the foregoing method embodiment.

The memory 402 may include a storage program area and a storage data area, where the storage program area may store an operating system and application programs required for at least one function. The storage data area may store data created according to the use of the electronic device, and the like. In addition, the memory 402 may include a high-speed random access memory, and a non-transitory memory, such as at least one magnetic disk storage device, a flash memory device, or other non-transitory solid-state storage device. In some embodiments, the memory 402 may optionally include a memory remotely disposed with respect to the processor 401, and these remote memories may be connected to the electronic device through a network. Examples of the above network include, but are not limited to, the Internet, an intranet, a local area network, a mobile communication network, and combinations thereof.

The electronic device for implementing the landing page processing method may further include: an input device 403 and an output device 404. The processor 401, the memory 402, the input device 403, and the output device 404 may be connected through a bus or in other manners. In FIG. 5, the connection through the bus is taken as an example.

The input device 403 may receive inputted numeric or character information, and generate key signal inputs related to user settings and function control of an electronic device, such as a touch screen, a keypad, a mouse, a trackpad, a touchpad, an indication rod, one or more mouse buttons, trackballs, joysticks and other input devices. The output device 404 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (egg, a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

It should be understood that various forms of processes shown above may be used to reorder, add, or delete steps. For example, the steps described in the present disclosure may be performed in parallel, sequentially, or in different orders. As long as the desired results of the technical solutions disclosed in the present disclosure can be achieved, no limitation is made herein.

The above specific embodiments do not constitute a limitation on the protection scope of the present disclosure. Those skilled in the art should understand that various modifications, combinations, sub-combinations and substitutions can be made according to design requirements and other factors.

## Claims

1. A landing page processing method, comprising:
obtaining (S110, S210) a landing page corresponding to an advertisement page;
identifying (S120, S220) an advertisement conversion component contained in the landing page; and
establishing (S130) a binding relation between the advertisement conversion component and the advertisement page.

2. The method according to claim 1, wherein the obtaining (S110, S210) the landing page corresponding to the advertisement page comprises:
obtaining address information of the landing page corresponding to the advertisement page from a preset database; and
crawling the landing page through a crawler browser based on the address information.

3. The method according to claim 1 or 2, wherein the identifying (S120, S220) the advertisement conversion component contained in the landing page comprises:
searching for a preset tag in a Hypertext Markup Language (HTML) file of the landing page through character recognition; and
obtaining a character string after the preset label that satisfies a preset condition through character string matching, and determining a component corresponding to the character string as the advertisement conversion component.

4. The method according to one of claims 1 to 3, wherein the identifying (S120, S220) the advertisement conversion component contained in the landing page comprises:
searching for a dom node in a Hypertext Markup Language (HTML) file of the landing page;
performing simulated clicking on the dom node;
intercepting a network request sent after the simulated clicking; and
obtaining a character string contained in the network request that satisfies a preset condition through character string matching, and determining a component corresponding to the character string as the advertisement conversion component.

5. The method according to one of claims 1 to 4, wherein the method further comprises:
receiving (S240) a search request sent by a client, and obtaining a search result list according to the search request; and
if a search result item in the search result list comprises the advertisement page, determining (S250) the advertisement conversion component contained in the landing page corresponding to the advertisement page according to the binding relation, and sending a search response message carrying summary information of the landing page and the advertisement conversion component to the client, so that when the client displays the summary information of the landing page on a search result page, the advertisement conversion component is displayed.

6. The method according to one of claims 1 to 5, wherein the establishing (S130) the binding relation between the advertisement conversion component and the advertisement page comprises:
adding (S230) the advertisement conversion component to a preset database, so that the advertisement conversion component and the advertisement page are stored in an association manner.

7. The method according to any one of claims 1 to 6, wherein the advertisement conversion component comprises at least one of a telephone link component, a message link component, a consultation link component, a form link component, a calling link component, and an APK link component.

8. A landing page processing apparatus (300), comprising:
a landing page obtaining module (301), configured to obtain a landing page corresponding to an advertisement page;
an identifying module (302), configured to identify an advertisement conversion component contained in the landing page; and
a binding relation establishing module (303), configured to establish a binding relation between the advertisement conversion component and the advertisement page.

9. The apparatus (300) according to claim 8, wherein the landing page obtaining module (301) comprises:
an address information obtaining unit, configured to obtain address information of the landing page corresponding to the advertisement page from a preset database; and
a landing page crawling unit, configured to crawl the landing page through a crawler browser based on the address information.

10. The apparatus (300) according to claim 8 or 9, wherein the identifying module (302) comprises:
a preset tag searching unit, configured to search for a preset tag in a Hypertext Markup Language (HTML) file of the landing page through character recognition; and
a character string matching unit, configured to obtain a character string after the preset label that satisfies a preset condition through character string matching, and determine a component corresponding to the character string as the advertisement conversion component.

11. The apparatus (300) according to one of claims 8 to 10, wherein the identifying module (302) comprises:
a searching unit, configured to search for a dom node in a Hypertext Markup Language (HTML) file of the landing page;
a simulated clicking unit, configured to perform simulated clicking on the dom node;
a network request intercepting unit, configured to intercept a network request sent after the simulated clicking; and
a character string obtaining unit, configured to obtain a character string contained in the network request that satisfies a preset condition through character string matching, and determine a component corresponding to the character string as the advertisement conversion component.

12. The apparatus (300) according to one of claims 8 to 11 , further comprising:
a search result list obtaining module, configured to receive a search request sent by a client, and obtain a search result list according to the search request; and
a search response message sending module, configured to, if a search result item in the search result list comprises the advertisement page, determine the advertisement conversion component contained in the landing page corresponding to the advertisement page according to the binding relation, and send a search response message carrying summary information of the landing page and the advertisement conversion component to the client, so that when the client displays the summary information of the landing page on a search result page, the advertisement conversion component is displayed.

13. An electronic device, comprising:
at least one processor; and
a memory communicatively connected to the at least one processor; wherein,
the memory stores instructions executable by the at least one processor, and when the instructions are executed by the at least one processor, the at least one processor is caused to execute the method according to any one of claims 1 to 7.

14. A non-transitory computer-readable storage medium storing computer instructions, wherein the computer instructions are used to make a computer to execute the method according to any one of claims 1 to 7.

15. A computer program product, comprising a computer program, wherein the computer program is executed by a processor, the processor is caused to perform the method according to any one of claims 1 to 7.
